# EUROPEAN PATENT APPLICATION

(11) **EP 4 686 388 A1**
(43) Date of publication of application: **04.02.2026**
(21) Application number: 25192245.6
(22) Date of filing: 28.07.2025
(51) Int. Cl.: A01D 34/30, A01D 34/73, A01D 34/13, A01D 34/14

(54) **CUTTING BLADE DRIVE APPARATUS**

(30) Priority: 29.07.2024 JP 2024122537; 02.06.2025 JP 2025091954
(71) Applicant: Yamabiko Corporation, Tokyo 1988760 (JP)
(72) Inventor: SHIMIZU, Kunio, Tokyo, 1988760 (JP)
(74) Representative: Canzler & Bergmeier Patentanwälte Partnerschaft mbB

(57) **Abstract**

A cutting blade drive apparatus includes: cutting blade units including a plurality of cutting blades arranged in a plane; a base unit configured to support the cutting blade units overlapping one another; and a drive mechanism supported by the base unit and configured to drive at least one of the cutting blade units to perform cutting operation. The plurality of cutting blades protrude from a circumference of the base unit in different directions. The drive mechanism allows at least one of the cutting blade units to translate drawing a circular orbit with no dead center so that the cutting blades of one cutting blade unit and the cutting blades of another cutting blade unit overlap to perform the cutting operation.

## Description

### BACKGROUND

### 1. Technical field

The present invention relates to a cutting blade drive apparatus.

### 2. Related Art

Conventionally, for mowing grass, pruning garden plants and hedges, and mowing lawns, a cutting blade apparatus with rotary cutting blades or reciprocating cutting blades to perform cutting operation has been used, as disclosed in, for example, Japanese Patent Application Laid-Open No. 2009-89705, and Japanese Examined Utility Model Application Publication No. S53-003171.

In the case of the conventional cutting blade drive apparatus with rotary blades, cutting blades rotate at a high speed changing their angles in the circumferential direction. Therefore, if the cutting blades hit stones on the ground, the stones are scattered. Thus, it is required to take measures or precautions to prevent the scattering objects from hitting the worker him/herself, or people and objects around the work site.

Meanwhile, in the case of the cutting blade drive apparatus with reciprocating cutting blades, when a foreign object such as a stone caught between two cutting blades, a large load is applied to the cutting blades, and the cutting blades are prone to chipping or deformation. In addition, when the cutting blades reciprocate, the speed of the cutting blades moving at a high speed once drops to zero at the turnaround of the reciprocation, which is likely to cause vibration and noise due to the large change in the speed.

Furthermore, when the conventional cutting blade drive apparatus mows grass and so forth by two rotary blades or reciprocating blades, a plurality of cutting blades arranged over the entire circumferences of the rotary blades or in the longitudinal direction of the reciprocating blades perform the cutting operation at the same time. Therefore, the entire cutting blades are subjected to a large cutting load. The rotary blades or the reciprocating blades need to be driven by a driving force commensurate with the large load. However, when the driving force is not sufficient, the cutting blades with grass and so forth caught between them may be stopped due to locking. If this stop due to locking often occurs, it may not be possible to smoothly proceed with the work.

In addition, in order to prevent the stop due to locking, when the driving force is increased, it may not help but increase the weight of a drive mechanism. This hampers the weight of the cutting blade drive apparatus from being reduced and consequently becomes a problem that increases the workload.

### SUMMARY

The present invention is proposed to address the above-described problems. That is, problems to be solved by the invention are to provide a cutting blade drive apparatus capable of preventing any object from scattering during the work to make it easy to ensure the safety of the work; suppressing vibration and noise while preventing a foreign object from being caught between the cutting blades; reducing the load applied to the cutting blades and smoothly performing the work without the stop due to locking; and reducing the weight of the apparatus to reduce the workload.

To solve the above-described problems, the cutting blade drive apparatus according to the invention includes: cutting blade units including a plurality of cutting blades arranged in a plane; a base unit configured to support the cutting blade units overlapping one another; and a drive mechanism supported by the base unit and configured to drive at least one of the cutting blade units to perform cutting operation. The plurality of cutting blades protrude from a circumference of the base unit in different directions. The drive mechanism allows at least one of the cutting blade units to translate drawing a circular orbit with no dead center so that the cutting blades of one cutting blade unit and the cutting blades of another cutting blade unit overlap to perform the cutting operation.

According to the cutting blade drive apparatus having the above-described features, it is possible to prevent any object from scattering during the work, and therefore to make it easy to ensure the safety of the work. In addition, it is possible to suppress vibration and noise while preventing a foreign object from being caught between the cutting blades. Moreover, it is possible to reduce the load applied to the cutting blades and smoothly perform the work without the stop due to locking. Furthermore, it is possible to reduce the weight of the apparatus to reduce the workload.

### BRIEF DESCRIPTION OF THE DRAWINGS

Fig. 1 is a top view illustrating a cutting blade drive apparatus according to an embodiment of the invention;
Fig. 2 is a bottom view illustrating the cutting blade drive apparatus according to the embodiment of the invention;
Fig. 3 is an exploded perspective view illustrating the cutting blade drive apparatus according to the embodiment of the invention;
Fig. 4 is a top view illustrating an eccentric cam;
Fig. 5 illustrates cutting operation of cutting blades in a first region;
Fig. 6 illustrates the cutting operation of the cutting blades in a second region;
Figs. 7A to 7C illustrate the relationship between the arrangement of the cutting blades of the cutting blade units and the eccentric direction of the eccentric cam;
Fig. 8 is an exploded perspective view illustrating a modification of the cutting blade drive apparatus according to the embodiment of the invention;
Fig. 9 is an exploded perspective view illustrating a modification of the cutting blade drive apparatus according to the embodiment of the invention;
Fig. 10 illustrates another embodiment of the cutting blade drive apparatus including a drive mechanism with a plurality of eccentric cams;
Fig. 11 illustrates another embodiment of the invention including a fixed blade unit;
Fig. 12 is a top view illustrating the embodiment of Fig. 11;
Fig. 13 illustrates another embodiment of the cutting blade drive apparatus including cutting blade units with diamond- shaped base parts;
Fig. 14 illustrates another embodiment of the cutting blade drive apparatus including cutting blade units with different pitches of the cutting blades;
Fig. 15 is an exploded perspective view illustrating another embodiment of the cutting blade drive apparatus including an intrusion prevention member;
Fig. 16 is a perspective view illustrating another embodiment of the cutting blade drive apparatus including an anti-intrusion member;
Fig. 17 is an exploded perspective view illustrating another embodiment of the cutting blade drive apparatus including a foreign object discharge port and a foreign object damming member; and
Fig. 18 is a top view illustrating the embodiment of the cutting blade drive apparatus including the foreign object discharge port and the foreign object damming member.

### DETAILED DESCRIPTION

Hereinafter, the embodiments of the present invention will be described with reference to the drawings.

The same reference numbers in the different drawings indicate the same functional parts, and therefore repeated description for each of the drawings is omitted.

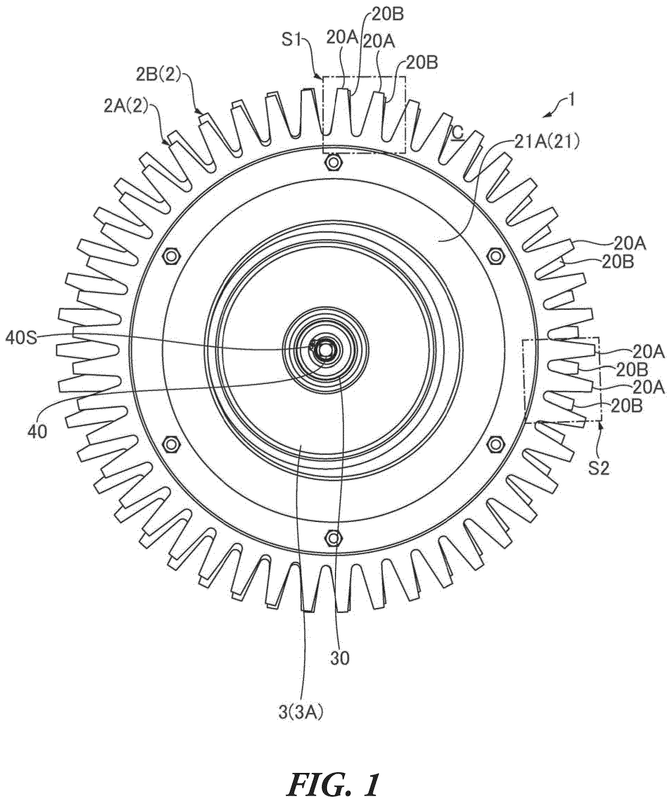

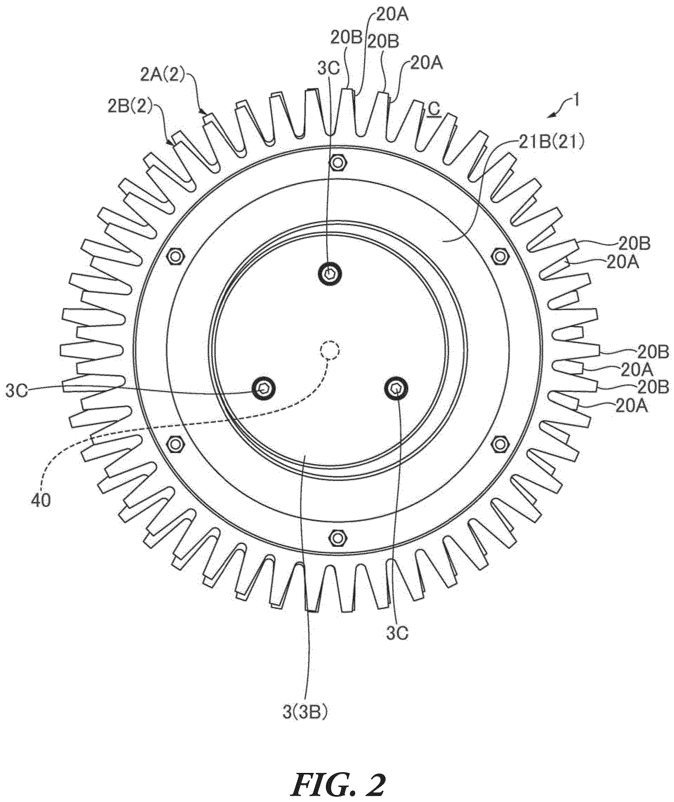

As illustrated in Fig. 1 to Fig. 3, a cutting blade drive apparatus 1 includes a plurality of cutting blade units 2, and base units 3 configured to support the cutting blade units 2.
With the illustrated example, the cutting blade drive apparatus 1 includes two cutting blade units 2A and 2B, but may include three or more cutting blade units 2. The cutting blade drive apparatus 1 performs cutting operation by driving at least one of the plurality of cutting blade unis 2. Here, all of the plurality of cutting blade units 2 may be driven. Alternatively, one or more of the cutting blade units 2 may be driven and the remainder may be fixed. As illustrated, an example where the two cutting blade units 2A and 2B are provided and both of them are driven are explained. However, only one of them may be driven while the other is fixed.

Each of the cutting blade units 2 includes a plurality of cutting blades 20 arranged in a plane. As illustrated, for the two cutting blade units 2A and 2B, the cutting blades 20A are arranged on the cutting blade unit 2A and cutting blades 20B are arranged on the cutting blade unit 2B. The plurality of cutting blade units 2A and 2B have the same shape, and therefore, hereinafter, when there is no need to distinguish between them, they are referred to as "cutting blade unit 2." A cutting space C is formed for each of the plurality of cutting blades 20 of the cutting blade unit 2.
The cutting space C formed for each of the cutting blades 20A of the cutting blade unit 2A is opened/closed by the cutting blade 20B of the cutting blade unit 2B and the cutting blades 20A overlap the cutting blades 20B, which results in cutting operation.

The bade units 3 support the plurality of cutting blade units 2 overlapping one another. With the illustrated example, the cutting blade units 2A and 2B to be driven are movably supported by the base units 3 while overlapping one another. There may be a cutting blade unit 2 fixed to the base unit 3 with a fastening member.

With the illustrated example in Fig. 1 to Fig. 3, the cutting blade unit 2A and the cutting blade unit 2B are arranged to overlap one another while their bottoms face one another, and are movably supported by the base units 3, respectively. The base units 3 include a first unit 3A on the top side, and a second unit 3B on the bottom side. Guide protrusions 3G protrude from one of the first unit 3A and the second unit 3B to the other. With the illustrated example, the guide protrusions 3G protrude from the first unit 3A to the second unit 3B. Fastening members 3C are screwed into the guide protrusions 3G to fix the first unit 3A to the second unit 3B while the cutting blade unit 2A and the cutting blade unit 2B are sandwiched between the first unit 3A and the second unit 3B.

The guide protrusions 3G penetrate guide holes 2G formed in the cutting blade units 2. The guide holes 2G guide the movement of the cutting blade units 2 such that the translational movement of the cutting blade units 2 is allowed and the direction of each of the cutting blades 20 is maintained, that is, the cutting blades 20 translate. The cutting blade unit 2A and the cutting blade unit 2B sandwiched between the first unit 3A and the second unit 3B of the base units 3 are moved in a range limited by the guide holes 2G. The cutting blades 20A and the cutting blades 20B mutually slide to open and close the cutting space formed for each of the cutting blades 20 and overlap each other, which results in cutting operation.

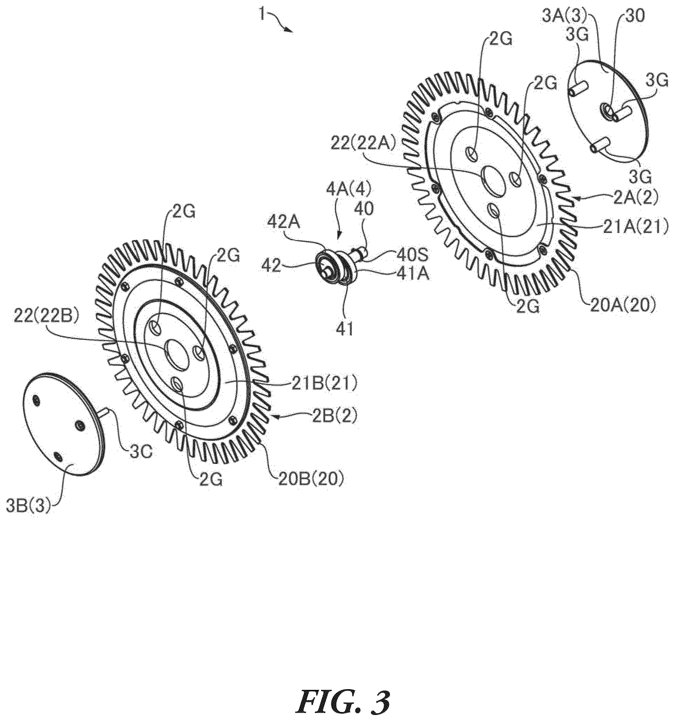

With the example illustrated in Fig. 1 to Fig. 3, each of the cutting blades 20 has a protruding shape such as a chevron and a convexity. As illustrated in Fig. 3, the plurality of cutting blades 20 protrude radially from the circumferences of discoid base parts 21(21A, 21B), and constitute the cutting blade units 2(2A, 2B). The cutting blade units 2(2A, 2B) supported by the base units 3 include the plurality of cutting blades 20(20A, 20B) protruding from the circumferences of the base units 3 in different directions.

With the illustrated example, the cutting blades 20 can be separated from the base parts 21. Therefore, when the cutting blades 20 are worn out or damaged, users can efficiently conduct maintenance by replacing only the cutting blades 20. In addition, it is possible to reduce the maintenance expense compared to when the whole cutting blade units 2 are replaced. The cutting blades 20 and the base part 21 may be integrally formed. In this case, it is possible to replace the whole cutting blade unit 2. With the illustrated example, the cutting blades 20 are arranged over the entire circumference of the discoid base part 21, and the plurality of cutting blades 20 all protrude in different directions.

As illustrated in Fig. 3, a drive mechanism 4 is disposed between the cutting blade unit 2A and the cutting blade unit 2B. The drive mechanism 4 allows at least one of the cutting blade units 2 to translate drawing a circular orbit with no dead center, and therefore the cutting blades 20A of the cutting blade unit 2A and the cutting blades 20B of the cutting blade unit 2B overlap to perform the cutting operation.

To be more specific, the drive mechanism 4 includes an eccentric cam 4A with a rotating shaft 40. The rotating shaft 40, as the center of rotation of the eccentric cam 4A eccentrically rotating, is pivotably supported by the base units 3, and a stopper ring 40S prevents the rotating shaft 40 from being removed. The rotating shaft 40 is rotated directly by a drive device such as an electric motor (not illustrated), or via a transmission mechanism. As an example, the rotating shaft 40 is pivotably supported via a bearing 30 in the first unit 3A to which the drive device is connected and is pivotably supported via a bearing (not illustrated) which is incorporated in the second unit 3B. Here, the guide protrusions 3G protrude in parallel with the rotating shaft 40.

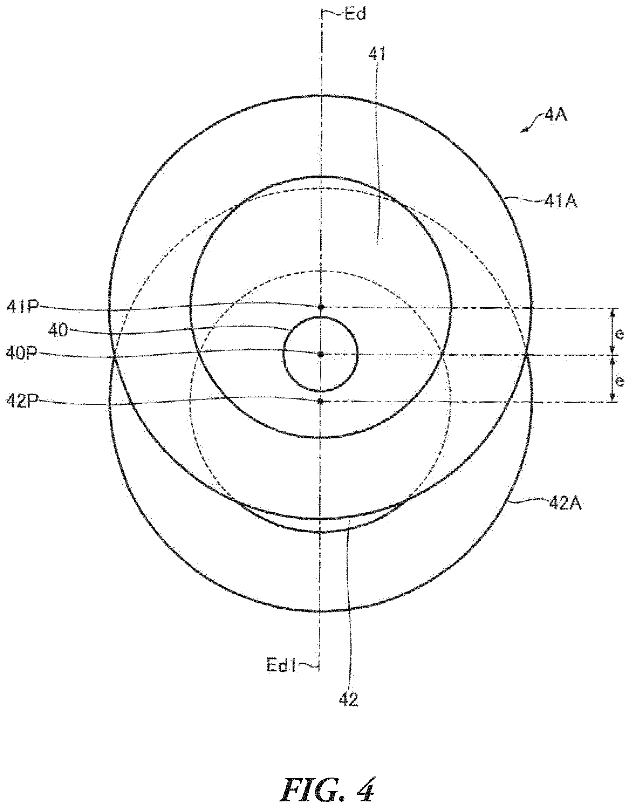

With an example illustrated in Fig. 4, the eccentric cam 4A includes a pair of cam members (a first cam member 41 and a second com member 42) which are arranged in parallel along the axial direction. The first cam member 41 and the second cam member 42 are fixed to the rotating shaft 40 with a phase difference and eccentrically rotated to drive the cutting blade unit 2A and the cutting blade unit 2B, respectively. Here, with the illustrated example, the pair of cam members is provided, and the cam member is provided for each of the cutting blade units 2 to be driven. When the number of the cutting blade units 2 to be driven is one, a single cam member is fixed to the rotating shaft 40.

With the illustrated example, the phase difference between the first cam member 41 and the second cam member 42 is 180 degrees. By this means, an eccentric direction Ed of the first cam member 41, that is, the direction of a line connecting a center 40P of the rotating shaft 40 with a center 41P of the first cam member 41, and an eccentric direction Ed1 of the second cam member 42, that is, the direction of a line connecting the center 40P of the rotating shaft 40 with a center 42P of the second cam member 42 are opposite to one another, and are in a straight line. Hereinafter, these directions will be referred to as the eccentric direction Ed of the eccentric cam 4A. The first cam member 41 and the second cam member 42 have cylindrical bodies whose central axes are parallel to the rotating shaft 40 and pass through the center 41P and the center 42P, respectively. The distance between the center 41P of the first cam member 41 or the center 42P of the second cam member 42 and the center 40P of the rotating shaft 40 is an eccentric radius e of the eccentric cam 4A.

The first cam member 41 and the second cam member 42 of the eccentric cam 4A are engaged with engagement holes 22(22A, 22B) provided in the base parts 21(21A, 21B) of the cutting blade units 2(2A, 2B), respectively. When the rotating shaft 40 is rotated, the cutting blade units 2(2A, 2B) are driven in response to the rotation of the eccentric cam 4A. With the illustrated example, the first cam member 41 of the eccentric cam 4A is engaged with an engagement hole 22A of the cutting blade unit 2A via a bearing 41A, and the second cam member 42 of the eccentric cam 4A is engaged with an engagement hole 22B of the cutting blade unit 2B via a bearing 42A.

When the eccentric cam 4A is rotated, the cutting blade units 2(2A, 2B) translate drawing circular orbits as movement trajectories without changing the direction of each of the cutting blades 20, accompanying the rotation of the eccentric cam 4A. In this case, the first cam member 41 and the second cam member 42 are fixed to the rotating shaft 40 with the phase difference of 180 degrees. Therefore, the cutting blade unit 2A engaged with the first cam member 41 and the cutting blade unit 2B engaged with the second cam member 42 move drawing the circular orbits always having the phase difference of 180 degrees.

Here, the phase difference between the first cam member 41 and the second cam member 42 is not limited to 180 degrees, but any degrees is possible. The first cam member 41 and the second cam member 42 with the phase difference of given degrees are engaged with the cutting blade unit 2A and the cutting blade unit 2B, respectively. By this means, these cutting blade units 2 move drawing the circular orbits with the phase difference of the given degrees.

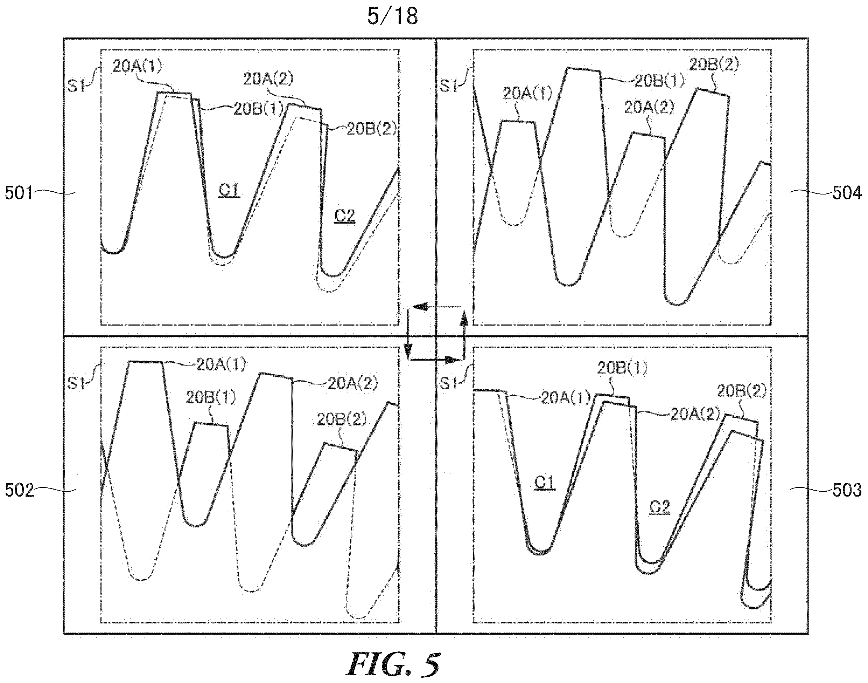

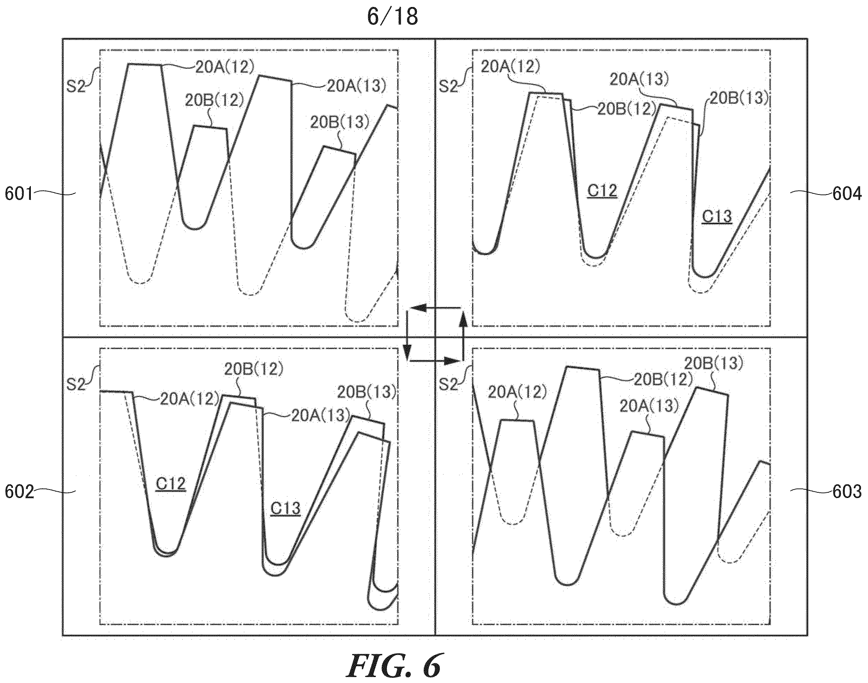

With reference to Fig. 5 and Fig. 6, the cutting operation performed by the cutting blades 20(20A, 20B) of the cutting blade units 2(2A, 2B) will be explained. Here, it is focused on the cutting blades 20 arranged in one region (a first region S1 illustrated in Fig. 1) of the plurality of cutting blades 20, and the cutting blades 20 arranged in the other region (a second region S2 illustrated in Fig. 1) in a position different from that of the one region. With the illustrated example, the first region S1 is located in the direction passing through the center 40P of the rotating shaft 40 and being orthogonal to the eccentric direction Ed of the eccentric cam 4A, and the second region S2 is located in the direction passing through the center 40P of the rotating shaft 40 and being the same as the eccentric direction Ed of the eccentric cam 4A.

A first cutting blade 20A(1) and a second cutting blade 20A(2) of the cutting blade unit 2A are arranged in the first region S1. A first cutting blade 20B(1) and a second cutting blade 20B(2) of the cutting blade unit 2B are also arranged in the first region S1.

During the rotation of the eccentric cam 4A for 360 degrees, the cutting blade 20A and the cutting blade 20B in the first region S1 are moved accordingly to come into a state 501, a state 502, a state 503 and a state 504 as illustrated in Fig. 5, each of which corresponds to the rotation of 90 degrees. This change of state is sequentially repeated by rotating the eccentric cam 4A for more than 360 degrees. The cutting blade units 2 do not rotate in themselves with the rotation of the eccentric cam 4A but translate without change in the direction of each of the cutting blades 20.

In the state 501 in Fig. 5, the cutting blade 20A(1) overlaps the cutting blade 20B(1), and the cutting blade 20A(2) overlaps the cutting blade 20B(2) shifting a little. In this state, a cutting space C1 formed by the cutting blade 20A(1) is open, and a cutting space C2 formed by the cutting blade 20A(2) is also open at a slightly shifted timing.

In the state 502 in Fig. 5, the cutting blade 20B(1) is moved into the cutting space C1, and the cutting blade 20B(2) is moved into the cutting space C2. By this means, the cutting spaces C1 and C2, which are open in the state 501, are closed. In this case, the cutting blade 20A(1) and the cutting blade 20A(2) protrude in different directions, and the cutting blade 20B(1) and the cutting blade 20B(2) protrude in different directions. Therefore, the timing at which the cutting space C1 is opened/closed is slightly shifted from the timing at which the cutting space C2 is opened/closed.

Then, objects to be cut get into the open cutting spaces C1 and C2, and after that, the cutting spaces C1 and C2 are closed. By this means, the objects to be cut in the cutting spaces C1 and C2 are cut by the cutting blades 20A and 20B. In this case, since the timing at which the cutting space C1 is opened/closed is shifted from the timing at which the cutting space C2 is opened/closed as described above, the timing of the cutting operation in the cutting space C1 is shifted from the timing of the cutting operation in the cutting space C2.

In the state 503 in Fig. 5, the cutting blade 20B(1) overlaps the cutting blade 20A(2); the cutting space C1 formed by the cutting blade 20A(1) is open again; and the cutting space C2 formed by the cutting blade 20A(2) is open again at a slightly shifted timing. Then, the state 504 in Fig. 5, the cutting blade 20B(1) is moved into the cutting space C1, and the cutting blade 20B(2) is moved into the cutting space C2. By this means, the cutting spaces C1 and C2, which are open in the state 503, are closed. At this time, the objects to be cut in the cutting spaces C1 and C2 are cut by the cutting blades 20A and 20B. In this case, the timing of the cutting operation in the cutting space C1 is shifted from the timing of the cutting operation in the cutting space C2 in the same way as described above.

With reference to Fig. 5, the cutting space C1 formed by the cutting blade 20A(1) and the cutting space C2 formed by the cutting blade 20A(2) adjacent to the cutting space C1 have been explained. Likewise, the timing at which one cutting space formed by the cutting blade 20A at a given position is opened/closed is shifted from the timing at which another cutting space formed by the cutting blade 20A adjacent to the one cutting space, and therefore the timing of the cutting operation is shifted accordingly.

In the second region S2 located in a position different from the position of the first region S1 by 90 degrees, a twelfth cutting blade 20A(12) and a thirteenth cutting blade 20A(13) of the cutting blade unit 2A are arranged, and a twelfth cutting blade 20B(12) and a thirteenth cutting blade 20B(13) of the cutting blade unit 2B are arranged, as illustrated in Fig. 6.

The cutting blade 20A(12) and the cutting blade 20A(13), and the cutting blade 20B(12) and the cutting blade 20B(13) in the second region S2 are changed into states 601, 602, 603, and 604 in Fig. 6, in concurrence with the timings at which the cutting blades 20A and the cutting blades 20B in the first region S1 are changed into the states 501, 502, 503 and 504 in Fig. 5.

That is, as to the positional relationship between the cutting blades 20A and the cutting blades 20B in Fig. 5 and Fig. 6, the state 601 in Fig. 6 is identical with the state 502 in Fig. 5; the state 602 in Fig. 6 is identical with the state 503 in Fig. 5; the state 603 in Fig. 6 is identical with the state 504 in Fig. 5; and the state 604 in Fig. 6 is identical with the state 501 in Fig. 5. That is, due to the rotation of the eccentric cam 4A, a phase shift of 90 degrees occurs between the timing at which the cutting space C1 is opened/closed in the first region S1 and the timing at which the cutting space C12 is opened/closed in the second region S2, and between the timing at which the cutting space C2 is opened/closed in the first region S1 and the timing at which the cutting space C13 is opened/closed in the second region S2.

That is, the timing of the cutting operation in the cutting space C1 formed by the cutting blade 20A(1) is shifted from the timing of the cutting operation in the cutting space C12 formed by the cutting blade 20A(12), which corresponds to the phase shift of 90 degrees in the rotation of the eccentric cam 4A. Likewise, the timing of the cutting operation in the cutting space C2 formed by the cutting blade 20A(2) is shifted from the timing of the cutting operation in the cutting space C13 formed by the cutting blade 20A(13), which corresponds to the phase shift of 90 degrees in the rotation of the eccentric cam 4A.

The movement of the cutting blades 20(20A, 20B) will be explained in more detail. When the cutting blade unit 2A and the cutting blade unit 2B are driven by the drive mechanism 4 together, both of them translate drawing circular orbits with no dead center. Meanwhile, when one of the cutting blade units 2A and 2B is fixed and the other is driven by the drive mechanism 4, the driven cutting blades 20 (for example, the cutting blades 20B) translate drawing a circular orbit with no dead center with respect to the fixed cutting blades 20 (for example, the cutting blades 20A). In this case, the movement of the cutting blades 20 draws a circular orbit having a radius which is the eccentric radius e of the eccentric cam 4A, and is translational movement without angular displacement.

Accordingly, the cutting blades 20A and 20B overlapping one another open/close the cutting spaces, while the edges of the cutting blades 20 move up and down relative to one another. Therefore, when a large foreign object such as a stone is getting into a cutting space formed by the cutting blade 20A, the cutting blade 20B going into the cutting space moves upward relatively. By this means, the foreign object is pushed out of the cutting space, and consequently the foreign object is not likely to be sandwiched between the cutting blade 20A and the cutting blade 20B. This reduces the load applied to the cutting blades 20 and also reduces the risk of chipping or deformation of the cutting blades.

Moreover, the moving range of the cutting blades 20 is limited to the eccentric radius e, and also the moving speed of the cutting blades 20 is low. Accordingly, even though the cutting blades 20 are driven by a motor with high-speed rotation, it is possible to reduce scatter and suppress vibration and noise, accompanying the movement of the cutting blades 20. Moreover, the motor with high-speed rotation can be adopted, and therefore it makes it possible to secure sufficient torque even when the size of the motor is small. In addition, it is possible to perform sufficient work using small and lightweight drive means even in a dense grassy area.

The moving range of the cutting blades 20 is limited as described above, and therefore the wear-out state of the cutting blades 20 provided over the entire circumferences of the cutting blade units 2 may not be uniform depending on the usage condition of the cutting blade drive apparatus 1. To address this, by conducting "rotation" to change the supported state of the cutting blade unit 2 by the base unit 3 at appropriate times. By this means, it is possible to uniform the wear-out state of the cutting blades 20 in the entire cutting blade unit 2. In this case, the cutting blade unit 2 includes the guide holes 2G through which the three guide protrusions 3G of the base unit 3 penetrate. By this means, it is possible to change the supported state of the cutting blade unit 2 by the base unit 3 by rotating the cutting blade unit 2 around the center of the base unit 3 by 120 degrees.

In order to realize the movement of the cutting blades 20A and the cutting blades 20B illustrated in Fig. 5 and Fig. 6, it is required to make a condition in which the cutting blades 20A and cutting blades 20B overlap each other and therefore the cutting spaces C formed by the cutting blades 20A are open, and a condition in which the cutting blades 20B get into the cutting spaces C formed by the cutting blades 20A and therefore the cutting spaces C are closed, according to the rotation of the eccentric cam 4A.

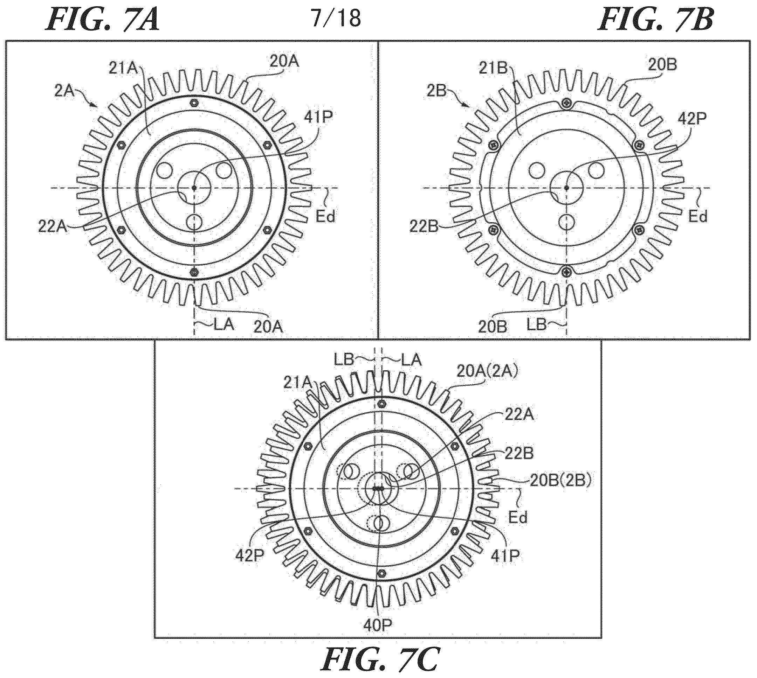

As illustrated in Fig. 7A, the cutting blades 20A of the cutting blade unit 2A, which protrude radially with respect to the center of the base part 21A, are arranged asymmetrically with respect to a reference line LA. This reference line LA is a straight line which is vertical to the eccentric direction Ed of the eccentric cam 4A having the first cam member 41 engaged with the engagement hole 22A of the cutting blade unit 2A and passes through the center of the cutting blade unit 2A (the center 41P of the first cam member 41). Likewise, as illustrated in Fig. 7B, the cutting blades 20B of the cutting blade unit 2B are arranged asymmetrically with respect to a reference line LB which is a straight line being vertical to the eccentric direction Ed of the eccentric cam 4A having the second cam member 42 engaged with the engagement hole 22B of the cutting blade unit 2B and passing through the center of the cutting blade unit 2B (the center 42P of the second cam member 42).

Moreover, as illustrated in Fig. 7C, the first cam member 41 is engaged with the engagement hole 22A of the cutting blade unit 2A and the second cam member 42 is engaged with the engagement hole 22B of the cutting blade unit 2B to allow the rear face of the cutting blade unit 2A face the rear face of the cutting blade unit 2B, and then the eccentric cam 4A of the drive mechanism 4 is disposed between the rear faces of the cutting blade units 2A and 2B. By this means, the reference line LA and the reference line LB are shifted from one another by twice the eccentric radius e of the eccentric cam 4A along the eccentric direction Ed. As a result, the cutting blades 20A and the cutting blades 20B protruding in the direction orthogonal to the eccentric direction Ed of the eccentric cam 4A are in the states 501 and 503 illustrated in Fig. 5 in which they overlap each other. Meanwhile, the cutting blades 20A and the cutting blades 20B protruding in the direction along the eccentric direction Ed are in the states 502 and 504 illustrated in Fig. 5 in which the cutting blades 20B are located in the cutting spaces C formed by the cutting blades 20A.

When the eccentric cam 2A is rotated, the cutting blade units 2A and 2B translate drawing the circular orbits, and therefore the protruding direction of each of the cutting blades 20A and the cutting blades 20B is not changed. In this case, the positional relationship between the cutting blades 20A and the cutting blades 20B is in the states 501 and 503 illustrated in Fig.5 in which the cutting blades 20A and the cutting blades 20B always overlap each other in the direction orthogonal to the eccentric direction Ed, according to the rotation angle of the eccentric cam 4A. That is, the positional relationship between the cutting blades 20A and the cutting blade 20B in given positions is changed as shown in the states 501 to 504 of Fig. 5 or 601 to 604 of Fig. 6, while changing the timing of the cutting operation according to the rotation angle of the eccentric cam 4A.

In the cutting blade drive apparatus 1, all of the cutting blades 20 of the cutting blade unit 2 are arranged such that the angle of each of the cutting blades 20 is different by 360 degrees/the number of cutting blades. Therefore, the timing of the cutting operation by the cutting blade 20 in a given position is shifted from the timing of the cutting operation by the adjacent one by a phase difference of 360 degrees/the number of cutting blades. As a result, the cutting load on the cutting blade unit 2 is significantly reduced compared to when all of the cutting blades 20 of the cutting blade unit 2 perform the cutting operation at the same time.

In addition, in the cutting blade drive apparatus 1, the cutting blades 20 are arranged over the entire circumference of the cutting blade unit 2. Therefore, the range of the cutting operation covers the entire circumference of the cutting blade unit 2, and consequently it is possible to perform the mowing work along the moving direction of the cutting blade drive apparatus 1 without changing the direction of the cutting blade drive apparatus 1.

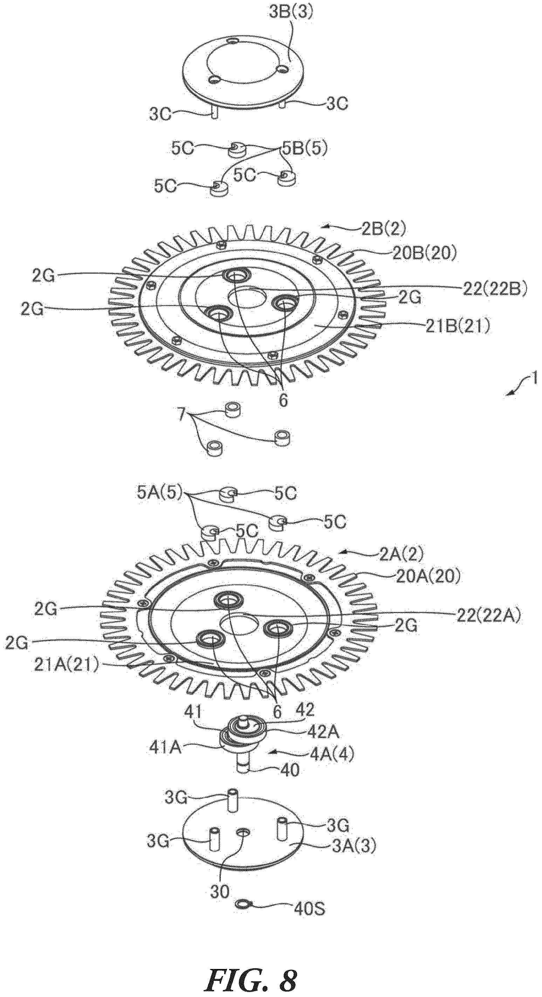

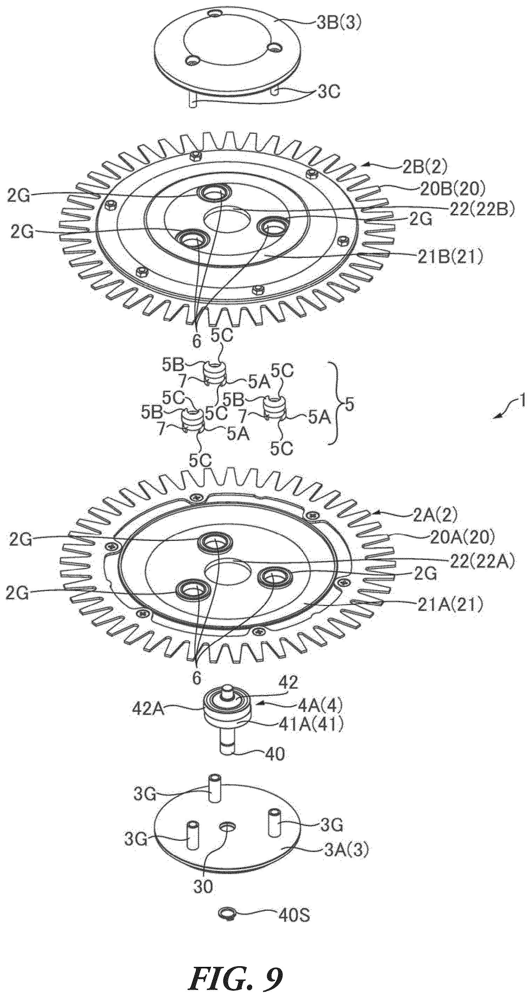

Fig. 8 and Fig. 9 illustrate modifications of the cutting blade drive apparatus 1. With the illustrated examples, guide cams 5 are inserted into the guide holes 2G of the cutting blade units 2 to stabilize the movement of the guide protrusions 3G in the guide holes 2G. The guide cams 5 include first guide cams 5A inserted into the guide holes 2G in the cutting blade unit 2A, and second guide cams 5B inserted into the guide holes 2G in the cutting blade unit 2B. The guide cams 5(5A, 5B) are inserted into the guide holes 2G via guide hole bearings 6 and smoothly slide along the inner surfaces of the guide holes 2G. If a smooth material such as resin is used as the material for the guide cams 5, the guide hole bearings 6 may be omitted. However, it is possible to more smoothly move the cutting blade units 2 by using the guide hole bearings 6.

The guide cams 5(5A, 5B) include engagement parts 5C with which the guide protrusions 3G are engaged. Spacer tubes 7 are disposed between the first guide cams 5A and the second guide cams 5B. The guide protrusions 3G pass through the spacer tubes 7 and are engaged with the engagement parts 5C of the first guide cams 5A and the engagement parts 5C of the second guide cams 5B. When the guide cams 5(5A, 5B) slide in response to the relative movement of the guide protrusions 3G in the guide holes 2G, the guide protrusions 3G engaged with the engagement parts 5C always smoothly move along the inner surfaces of the guide holes 2G. The relative movement of the guide protrusions 3G in the guide holes 2G is attributed to the movement of the cutting blade unit 2 by the rotation of the eccentric cam 4A. Therefore, the guide cams 5(5A, 5B) slide in synchronization with the rotation of the eccentric cam 4A.

With the example illustrated in Fig. 8, the first guide cams 5A are separated from the second guide cams 5B. On the other hand, with the example illustrated in Fig. 9, the first guide cams 5A are coupled with the second guide cams 5B via the spacers 7, respectively. By this means, each of the first guide cams 5A and each of the second guide cams 5B constitute one guide cam 5. In this way, the first guide cam 5A and the second guide cam 5B are integrated with one another, and therefore it is possible to stably synchronize the movement of the first guide cams 5A and the second guide cams 5B with the movement of the eccentric cam 4A. As a result, it is possible to more smoothly move the cutting blade units 2A and 2B. As described above, the guide cams 5 are inserted into the guide holes 2G to guide the movement of the guide protrusions 3G in the guide holes 2G. By this means, it is possible to suppress the vibration and the noise caused when the guide protrusions 3G hit the inner surfaces of the guide holes 2G.

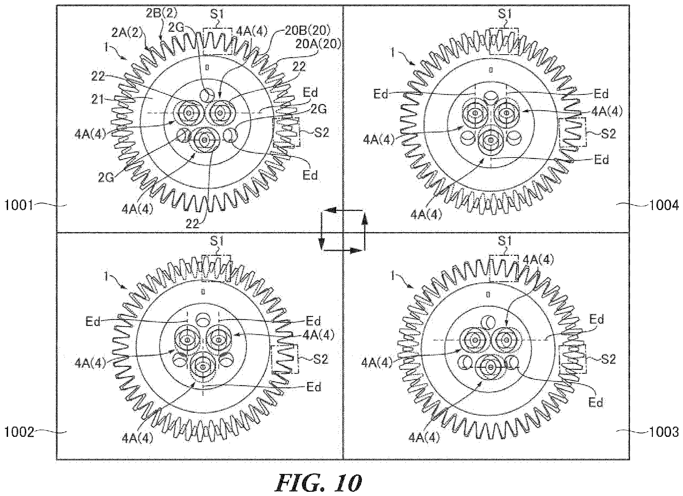

Fig. 10 illustrates the cutting blade drive apparatus 1 according to another embodiment. The cutting blade drive apparatus 1 includes the cutting blade units 2(2A, 2B) which are approximately the same as those in the embodiment illustrated in Fig. 1 to Fig. 3, and the drive mechanism 4 including a plurality of eccentric cams 4A. Here, an example where three eccentric cams 4A are used is illustrated. However, the number of eccentric cams 4A is not limited to three but four or more may be possible. The plurality of eccentric cams 4A are engaged with the engagement holes 22 such that their eccentric directions Ed are parallel to each other. The cutting blade unit 2 includes the engagement holes 22 to engage the plurality of eccentric cams 4A, and the number of the engagement holes 22 is the same as that of the eccentric cams 4A. It is preferred that the engagement holes 22 are arranged at even intervals around the center of the cutting blade unit 2 for balance.

At least one of the eccentric cams 4A is driven, and the remaining eccentric cams 4A are driven by the movement of the cutting blade unit 2. In this way, the plurality of eccentric cams 4A are provided such that their eccentric directions are parallel to each other, and therefore function as a parallel link. Consequently, even though there is no guide (for example, the guide protrusions 3G, the guide holes 2G, and the guide cams 5) to translate the cutting blade unit 2, the cutting blade unit 2 can translate drawing the circular orbit without unstably reversing.

Fig. 10 illustrates the cutting operation of the cutting blade drive apparatus 1 accompanying the rotation of the eccentric cams 4A. As illustrated in Fig. 10, the cutting blade drive apparatus 1 performs the cutting operation in the same way as the cutting blade drive apparatus 1 illustrated in Fig. 1 to Fig. 3, and the positions of the cutting blades 20 are changed into a state 1001, a state 1002, a state 1003, a state 1004 and the state 1001 in the order as illustrated in Fig. 10, in the course of changing the eccentric direction Ed of the eccentric cams 4A by 0 degrees, 90 degrees, 180 degrees, 270 degrees, and 360 degrees.

In the cutting blade drive apparatus 1, in the direction orthogonal to the eccentric direction Ed, the cutting blades 20A overlap the cutting blades 20B and the cutting spaces are open, and on the other hand, in the direction identical with the eccentric direction Ed, the cutting blades 20B are located between the cutting blades 20A and the cutting spaces are closed, in the same way as the embodiment described above. Therefore, in the cutting blade drive apparatus 1 illustrated in Fig. 10, the timing at which one cutting space of the cutting blades 20 is opened/closed is different from the timing at which another cutting space of cutting blades 20 is opened/closed, and the timing of the cutting operation is shifted for each of the cutting blades 20, in the same way as the embodiment described above.

When the plurality of eccentric cams 4A of the drive mechanism 4 are provided, basically, by rotating the rotating shaft 40 of one of the eccentric cams 4A, the cutting blade units 2A and 2B are driven, and the other eccentric cams 4A are rotated accordingly. However, in order to rotate the plurality of eccentric cams 4A in a balanced manner, it is preferred that the driving force is transmitted to the rotating shaft 40 of each of the eccentric cams 4A. To realize that, one of the rotating shafts 40 is used as a driving shaft, and the other rotating shafts 40 are driven via a pinion gear engaged with the driving shaft; or a drive gear is rotated separately, and the rotating shafts of the plurality of eccentric cams 4A are equally driven by the drive gear.

When the plurality of eccentric cams 4A of the drive mechanism 4 are provided, the wear-out state of the cutting blades 20 arranged over the entire circumference of the cutting blade unit 2 may not be uniform depending on the usage condition of the cutting blade drive apparatus 1 because the moving range of the cutting blades 20 is limited as described above. To address this, by conducting rotation to change the supported state of the cutting blade unit 2 by the base unit 3 at appropriate times as described above, it is possible to uniform the wear-out state of the cutting blades 20 in the entire cutting blade unit 2. In the case where the cutting blade unit 2 is engaged with the three eccentric cams 4A, the cutting blade unit 2 is rotated around the center of the base unit 3 by 120 degrees to change the pairing of the eccentric cams 4A and the engagement holes 22. By this means, it is possible to change the supported state of the cutting blade unit 2 by the base unit 3.

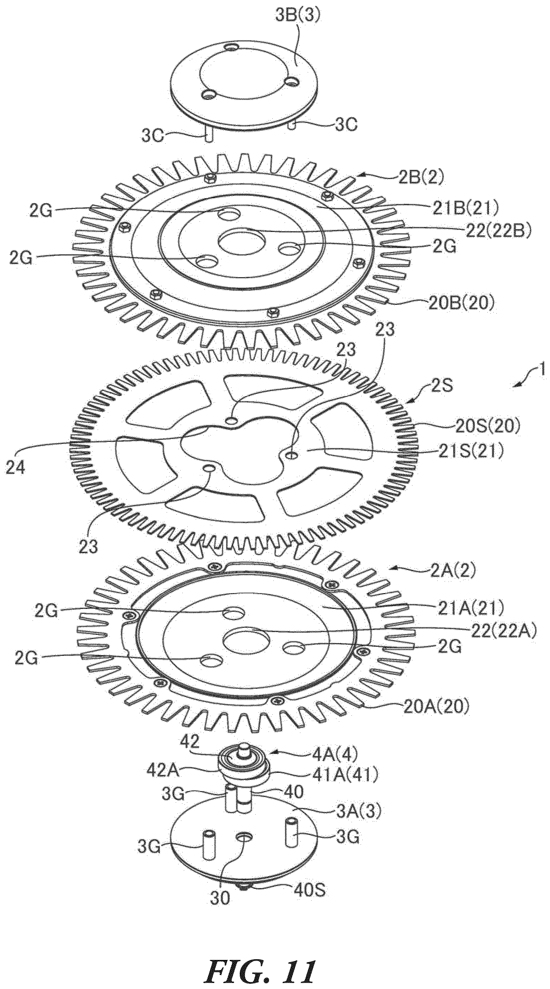

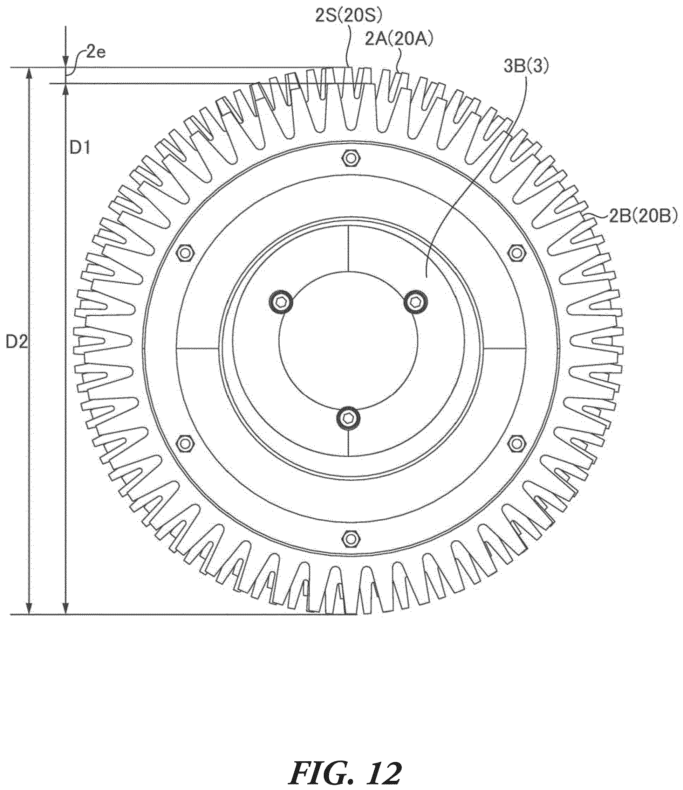

Fig. 11 and Fig. 12 illustrate the cutting blade drive apparatus 1 according to another embodiment. Compared to the cutting blade drive apparatus 1 illustrated in Fig. 1 to Fig. 3, the cutting blade drive apparatus 1 illustrated in Fig. 11 includes a fixed blade unit 2S disposed between the cutting blade unit 2A and the cutting blade unit 2B. The fixed blade unit 2S includes cutting blades 20S(20) on its circumference, and a base part 21S(21) including through-holes 23 through which the guide protrusions 3G of the base units 3 penetrate. In addition, a drive mechanism housing hole 24 configured to allow the rotation of the eccentric cam 4A is provided in the center of the base part 21S(21) of the fixed blade unit 2S.

The guide protrusions 3G are inserted into the through-holes 23 while the fixed blade unit 2S is sandwiched between the cutting blade units 2A and 2B. By this means, the fixed blade unit 2S is fixed to the base units 3. When the eccentric cam 4A of the drive mechanism 4 is rotated, the cutting blade unit 2A and the cutting blade unit 2B translate drawing the circular orbits with respect to the fixed blade unit 2S, and the cutting space formed for each of the cutting blades 20S of the fixed blade unit 2S is opened/closed according to the movement of the cutting blades 20A and 20B.

In this case, as illustrated in Fig. 12, an outer diameter D1 of each of the cutting blade units 2A and 2B is smaller than an outer diameter D2 of the fixed blade unit 2S by 2e (e: eccentric radius). By this means, it is possible to move the cutting blades 20A and 20B of the cutting blade units 2A and 2B within the range of the outer circumference of the fixed blade unit 2S. Therefore, for example, when mowing grass by the wall, the cutting blades 20S of the fixed blade unit 2S is put on the wall. By this means, it is possible to prevent the moving cutting blades 20A and 20B from hitting the wall and therefore to smoothly mow the grass by the wall.

Instead of the fixed blade unit 2S, a fixed plate with both surfaces functioning as files are provided, and the cutting blade units 2A and 2B are driven. By this means, it is possible to sharpen the cutting blades 20A and 20B. The fixed plate used in this case is a disk-shaped plate having the same outer diameter as that of the fixed blade unit 2S and including the through-holes 23 and the drive mechanism housing hole 24. When the cutting blades 20A and 20B of the cutting blade units 2A and 2B become blunt, this fixed plate is sandwiched between the cutting blade units 2A and 2B, and then the cutting blade units 2A and 2B are driven. By this means, it is possible to easily conduct maintenance to sharpen the cutting blades 20A and 20B.

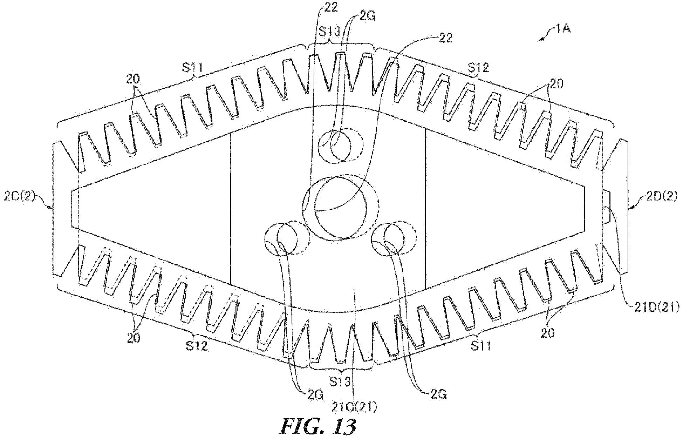

Fig. 13 illustrates a cutting blade drive apparatus 1A according to another embodiment. The configuration of this embodiment is the same as that of the above-described embodiments except for the form of cutting blade units 2(2C, 2D), and the base unit and the drive mechanism are the same as in the above-described embodiments and therefore are not illustrated.

In this embodiment, the two cutting blade units 2C and 2D include base parts 21(21C, 21D) having a diamond shape, respectively. Adjacent sides of the perimeter of each of the base parts 21(21C, 21D) are not parallel to each other. First regions S11 are formed on a pair of parallel sides, and second regions S12 are formed on a pair of parallel sides which are not parallel to the first regions S11. In addition, third regions S13 are formed between the first regions S11 and the second regions 12, respectively.

In the cutting blade units 2(2C, 2D), all of the cutting blades 20 in the first regions S11 protrude in the direction parallel to each other, and all of the cutting blades 20 in the second regions S12 protrude in the direction parallel to each other. The protruding direction of the cutting blades 20 in the first regions S11 is different from the protruding direction of the cutting blades 20 in the second regions S12. In addition, three cutting blades 20 in each of the third regions S13 protrude in the direction different from each other.

With this embodiment, in the cutting blade drive apparatus 1A, when the cutting blade units 2(2C, 2D) are driven by the drive mechanism 4 (not illustrated) to translate drawing the circular orbits, the timing at which the cutting blades 20 in the first regions S11 perform the cutting operation is different from the timing at which the cutting blades 20 in the second regions S12 located in the different positions from those of the first regions S11 perform the cutting operation. It is because the protruding direction of the cutting blades 20 in the first regions S11 is different from the protruding direction of the cutting blades 20 in the second regions S12. In this case, all of the cutting blades 20 in the first regions S11 protruding in the same direction perform the cutting operation at the same time, and also all of the cutting blades 20 in the second regions S12 protruding in the same direction perform the cutting operation at the same time.

Meanwhile, the three cutting blades 20 in the third regions S13 protrude in the different directions from each other, and therefore the cutting operation in the cutting spaces formed by the cutting blades 20 is performed at different timings.

According to the cutting blade drive apparatus 1A as described above, when the mowing work is performed by moving the cutting blade units 2 in a direction intersecting the horizontal widths of the first regions S11 and the second regions S12, it is possible to widen the working width for one stroke by increasing the horizontal widths of the first regions S11 and the second regions S12. In this case, the timing of the cutting operation in the first regions S11 is different from the timing of the cutting operation in the second regions S12, and in addition, the timing of the cutting operation is different for each of the cutting blades 20 in the third region S13. Therefore, it is possible to prevent the cutting load from being increased while widening the working width.

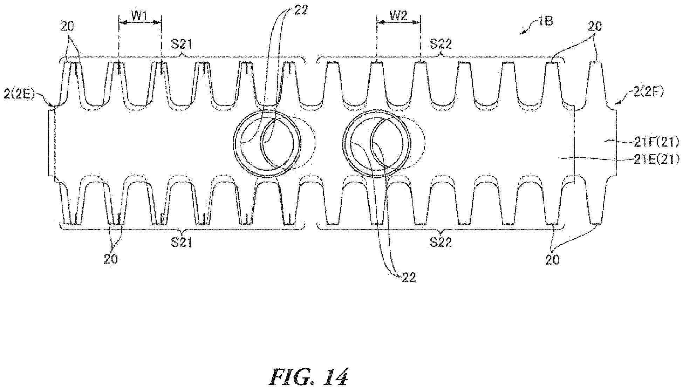

Fig. 14 illustrates a cutting blade drive apparatus 1B according to another embodiment. This embodiment is different in the form of cutting blade units 2(2E, 2F) from the above-described embodiment. The configuration of the base unit and the drive mechanism (not illustrated) is the same as that in the above-described embodiments. However, the guide protrusions of the base unit may be omitted, and therefore the guide holes of the cutting blade units 2 (2E, 2F) may be omitted accordingly. In addition, the drive mechanism (not illustrated) of the cutting blade drive apparatus 1B includes two eccentric cams. These eccentric cams are engaged with the engagement holes 22 of the cutting blade unit 2 while they have the same eccentric direction.

With this embodiment, the two cutting blade units 2(2E, 2F) include rectangular base parts 21(21E, 21F) which elongate in one direction, respectively. The perimeter of each of the base parts 21(21E, 21F) in the longitudinal direction are in straight lines, and the cutting blades 20 are arranged in parallel protruding in the direction orthogonal to the straight lines.

Here, in the cutting blade unit 2E, a distance (pitch) W1 between the cutting blades 20 in a first region S21 is different from a distance (pitch) W2 between the cutting blades 20 in a second region S22. In addition, the plurality of cutting blades 20 are arranged at a regular interval (pitch) in the first region S21, and also arranged at a regular interval (pitch) in the second region S22. On the other hand, in the cutting blade unit 2F overlapping the cutting blade unit 2E, all of the cutting blades 20 are arranged at a regular interval (pitch) W2.

With this embodiment, in the cutting blade drive apparatus 1B, when the cutting blade units 2(2E, 2F) are driven by the drive mechanism (not illustrated) to translate drawing the circular orbits, the timing of the cutting operation in the cutting space for each of the cutting blades 20 in the first region S21 is different from the timing of the cutting operation in the cutting space for each of the cutting blades 20 in the second region S22 located in the different position from that of the first region S21.

In addition, in the first region S21, the pitch W1 between the cutting blades 20 of the cutting blade unit 2E is different from the pitch W2 between the cutting blades 20 of the cutting blade unit 2F. By this means, the timing of the cutting operation in the cutting space for each of the cutting blades 20 in the first region S21 is shifted little by little.

In this case, in the first region S21, the pitch W1 of the cutting blade unit 2F is different from the pitch W2 of the cutting blade unit 2E, and therefore the cutting space formed by each of the cutting blades 20 of the cutting blade unit 2E is opened/closed by the cutting blade 20 of the cutting blade unit 2F at a timing shifted for each of the cutting blades 20. Accordingly, the timing of the cutting operation is shifted for each of the cutting blades 20. Meanwhile, in the second region S22, the pitch W2 of the cutting blade unit 2F is the same as the pitch W2 of the cutting blade unit 2E, and therefore all of the cutting blades 20 in the second region S22 perform the cutting operation at the same timing.

According to the cutting blade drive apparatus 1B as described above, when the mowing work is performed by moving the cutting blade units 2 in a direction intersecting the horizontal widths of the first region S21 and the second region S22, it is possible to widen the working width for one stroke by increasing the horizontal widths of the first region S21 and the second region S22. In this case, the timing of the cutting operation in the first region S21 is different from the timing of the cutting operation in the second region S22, and in addition, the timing of the cutting operation is different for each of the cutting blades 20 in the first region S21. Therefore, it is possible to prevent the cutting load from being increased while widening the working width.

As described above, the cutting blade drive apparatus 1(1A, 1B) according to the embodiments of the invention includes the cutting blade units 2 having the plurality of cutting blades 20 arranged in a plane, and the base units 3 configured to support the cutting blade units 2 overlapping one another, and is configured to perform cutting operation by driving at least one of the cutting blade units 2. The cutting space formed for each of the cutting blades 20 of the cutting blade units 2 is opened/closed to perform the cutting operation. The timing at which one cutting space is opened/closed is different from the timing at which another cutting space is opened/closed, and therefore the timing of the cutting operation in the cutting space is shifted.

It makes it possible to enable the cutting blade drive apparatus 1(1A, 1B) to reduce the cutting load on the cutting blades 20 and smoothly perform the mowing work preventing from being stopped due to locking. In addition, it is possible to reduce the weight of the cutting blade drive apparatus while preventing the stop due to locking and also reduce the workload while smoothly performing the mowing work.

Moreover, in the cutting blade drive apparatus 1(1A, 1B) according to the embodiments of the invention, the cutting blade units 2 include the plurality of cutting blades 20 protruding from the perimeters of the base units 3 in different directions; and the drive mechanism 4 allows at least one of the cutting blade units 2 to translate drawing the circular orbit with no dead center to perform the cutting operation by the cutting blades 20A of the cutting blade unit 2A and the cutting blades 20B of the cutting blade unit 2B overlapping each another.

By this means, the cutting blades 20 moves drawing the circular orbits without angular displacement, and therefore, when the cutting blades 20 hit foreign objects such as stones, there is no force applied to bounce them away significantly.
Consequently, it is possible to prevent any object from scattering during the work and therefore to easily ensure the safety of the work. Moreover, the movement of the cutting blades 20 is not likely to allow a foreign object to be caught into between the cutting blades 20. Therefore, it is possible to prevent the foreign object from being caught between the cutting blades 20, and consequently to prevent the cutting blades 20 from being damaged. Furthermore, it is possible to lower the moving speed of the cutting blades 20, and, by drawing the circular orbit with no dead center, it is possible to suppress vibration and noise in the work.

As described above, the embodiments of the present invention have been described in detail with reference to the drawings. However, the specific configuration is not limited to the embodiments, and the design can be changed without departing from the scope of the present invention. In addition, the above-described embodiments can be combined by utilizing each other's technology as long as there is no particular contradiction or problem in the purpose and configuration.

For example, by applying the region in the embodiment illustrated in Fig. 14, which includes different pitches for the cutting blades 20 of the cutting blade units 2, to the cutting blade units 2 of the cutting blade drive apparatus 1 illustrated in Fig. 1 to Fig. 3, or the cutting blade units 2 of the cutting blade drive apparatus 1A illustrated in Fig. 13, it is possible to further shift the timing of the cutting operation for each of the cutting blades 20, and therefore to effectively distribute the cutting load.

In addition, the fixed blade unit 2S illustrated in Fig. 11 and the fixed plate for filing may be added not only to the cutting blade drive apparatus 1 illustrated in Fig. 1 to Fig. 3, but also to the cutting blade drive apparatus 1 including the plurality of eccentric cams 4A illustrated in Fig. 10. Furthermore, by adapting the form of the fixed blade unit 2S or the fixed plate to the form of the cutting blade units 2C to 2F, it is possible to add the fixed blade unit 2S or the fixed plate to the cutting blade drive apparatus 1A and the cutting blade drive apparatus 1B illustrated in Fig. 13 and Fig. 14.

Furthermore, the cutting blade drive apparatus 1 may additionally include a structure to prevent foreign objects such as grass and stones from intruding into the drive mechanism 4.

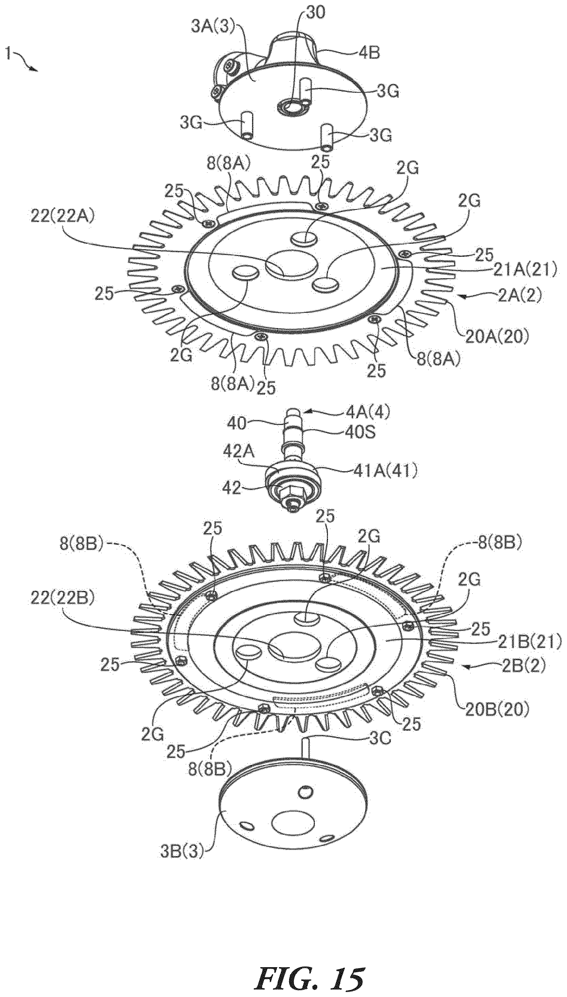

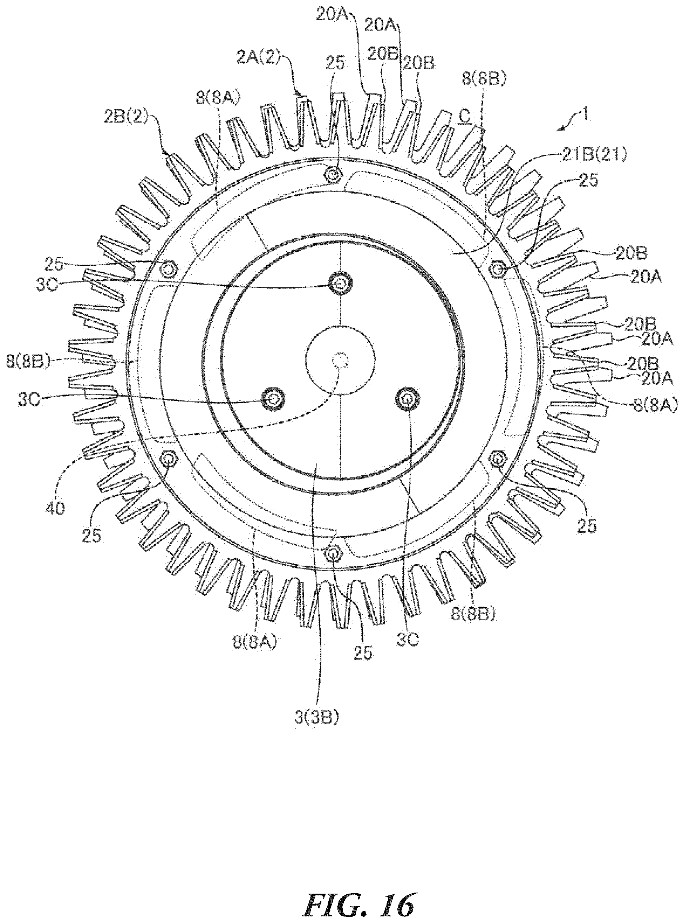

Fig. 15 and Fig. 16 illustrate an example of this structure where foreign object anti-intrusion members 8(8A, 8B) are attached to the inner surfaces facing one another of the base parts (21A, 21B) of the cutting blade units 2. In this case, the foreign object anti-intrusion members 8A are bonded to the periphery of the inner surface of the base part 21A in every other space between fastening members 25 fixing the cutting blades 20A to the circumference of the base part 21A. Meanwhile, the foreign object anti-intrusion members 8B are bonded to the periphery of the inner surface of the base part 21B in every other space between the fastening members 25 not to overlap the foreign object anti-intrusion members 8A.

In this way, the foreign object anti-intrusion members 8(8A, 8B) are provided. Therefore, when the base parts 21(21A, 21B) of the cutting blade units 2 engaged with the eccentric cam 4A of the drive mechanism 4 driven via a power transmission part 4B translate drawing circular orbits with no dead center, the foreign object anti-intrusion members 8(8A, 8B) are moved accompanying the movement of the base parts 21(21A, 21B). In this case, the foreign object anti-intrusion members 8A bonded to the base part 21A move with the base part 21A, sliding the inner surface of the base part 21B not having the foreign object anti-intrusion members 8A. Likewise, the foreign object anti-intrusion members 8B bonded to the base part 21B move with the base part 21B, sliding the inner surface of the base part 21A not having the foreign object anti-intrusion members 8B. By this means, a foreign object going to intrude into the space between the base parts 21A and 21B is pushed outside by the movement of the foreign object anti-intrusion members 8(8A, 8B), which prevents the foreign object from intruding into the drive mechanism 4. It is preferred that a material for the foreign object anti-intrusion members 8(8A, 8B) allows the foreign object anti-intrusion members 8(8A, 8B) to smoothly slide the inner surfaces of the base parts 21(21A, 21B) while tightly adhering to the inner surfaces. An example of the material for the foreign object anti-intrusion members 8 may be a thin felt.

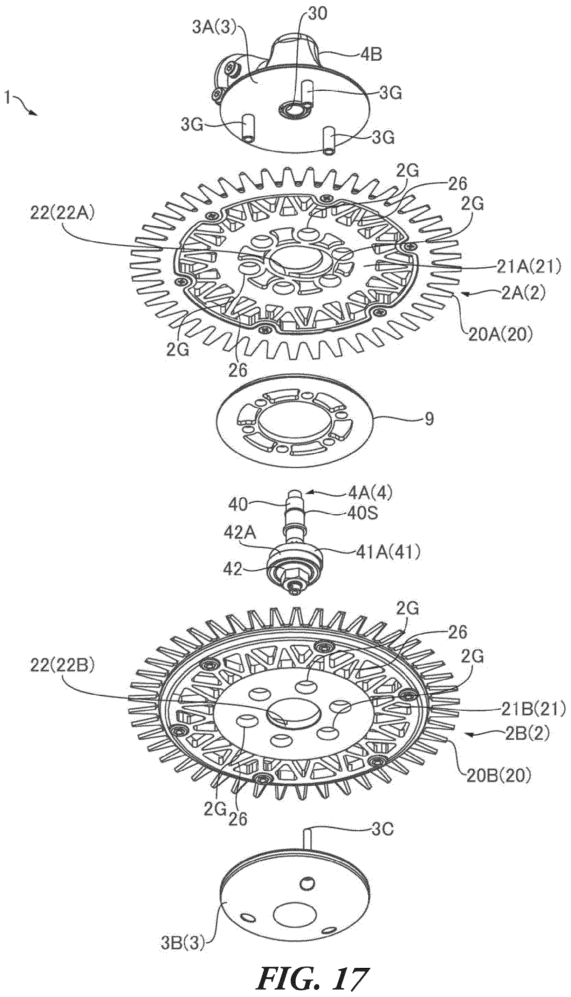

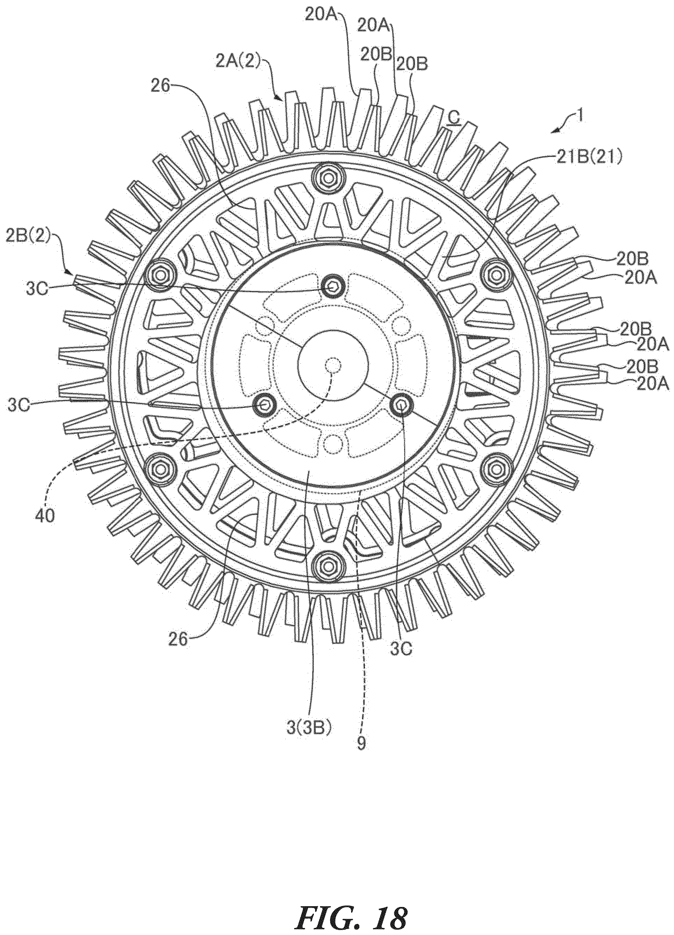

Fig. 17 and Fig. 18 illustrate another embodiment where the base parts 21 include a lot of foreign object discharge holes 26 and a foreign object catching member 9 provided in the base parts 21(21A, 21B) to prevent the foreign object from intruding into the drive mechanism 4.

The lot of foreign object discharge holes 26 provided in the base parts 21 function to discharge the foreign objects intruding into the space between the base parts 21(21A, 21B). Meanwhile, the foreign object catching member 9 in the base parts 21(21A, 21B) is provided to surround the drive mechanism 4. The guide protrusions 3G of the base units 3 pierce the foreign object catching member 9 to fix the foreign object catching member 9. When the base parts 21(21A, 21B) engaged with the eccentric cam 4A of the drive mechanism 4 driven via the power transmission part 4B translate circular orbits with no dead center, the positions of the lot of foreign object discharge holes 26 formed in the base parts 21 are shifted accompanying the movement of the base parts 21(21A, 21B). In this case, the peripheral wall of the fixed foreign object catching member 9 is moved relative to the foreign object discharge holes 26, so that the foreign objects intruding into the base parts 21 are discharged to the outside through the foreign object discharge holes 26. By this means, it is possible to prevent foreign objects from intruding into the drive mechanism 4.

The base parts 21 including the lot of foreign object discharge holes 26 may be formed by resin molding. Moreover, it is possible to reduce the weight of the base parts 21 by providing the lot of foreign object discharge holes 26 in the base parts 21, and consequently to reduce the total weight of the cutting blade drive apparatus 1. This makes it easy to handle the cutting blade drive apparatus 1.

### List of reference signs

1, 1A, 1B: cutting blade drive apparatus,
2, 2A, 2B, 2C, 2D, 2E, 2F: cutting blade unit,
2G: guide hole, 2S: fixed blade unit,
20, 20A, 20B, 20S: cutting blade,
21, 21A, 21B, 21S: base part,
22, 22A, 22B: engagement hole,
23: through-hole, 24: drive mechanism housing hole,
3: base unit, 3A: first unit, 3B: second unit,
3C: fastening member, 3G: guide protrusion, 30: bearing,
4: drive mechanism, 4A: eccentric cam,
4B: power transmission part,
40: rotating shaft, 40S: stopper ring,
41: first cam member, 42: second cam member,
40P, 41P, 42P: center, 41A, 42A: bearing,
5: guide cam, 5A: first guide cam, 5B: second guide cam,
5C: engagement part, 6: guide hole bearing, 7: spacer tube
8, 8A, 8B: foreign object anti-intrusion member,
9: foreign object catching member,
C, C1, C2, C12, C13: cutting space,
D1, D2: outer diameter
S1, S11, S21: first region, S13: third region,
S2, S12, S22: second region,
e: eccentric radius, Ed, Ed1: eccentric direction,
W1, W2: pitch

## Claims

1. A cutting blade drive apparatus comprising:
cutting blade units including a plurality of cutting blades arranged in a plane;
a base unit configured to support the cutting blade units overlapping one another; and
a drive mechanism supported by the base unit and configured to drive at least one of the cutting blade units to perform cutting operation,
wherein the plurality of cutting blades protrude from a circumference of the base unit in different directions, and
the drive mechanism allows at least one of the cutting blade units to translate drawing a circular orbit with no dead center so that the cutting blades of one cutting blade unit and the cutting blades of another cutting blade unit overlap to perform the cutting operation.

2. The cutting blade drive apparatus according to claim 1, wherein the drive mechanism allows the cutting blade units to translate drawing circular orbits with a phase difference.

3. The cutting blade drive apparatus according to claim 1, wherein the drive mechanism includes an eccentric cam including:
a rotating shaft pivotably supported by the base unit; and
cam members fixed to the rotating shaft, the cam members being configured to eccentrically rotate and slidably engaged with the cutting blade units, and
the base unit guides the cutting blade units to translate the cutting blade units.

4. The cutting blade drive apparatus according to claim 3, wherein the cam members of the eccentric cam are fixed to the rotating shaft with a phase difference.

5. The cutting blade drive apparatus according to claim 3, wherein the drive mechanism includes a plurality of eccentric cams, and at least one of rotating shafts is rotated directly or via a transmission mechanism.

6. The cutting blade drive apparatus according to claim 1, wherein:
a cutting space formed for each of the cutting blades of one cutting blade unit is opened/closed by a cutting blade of another cutting blade unit to perform the cutting operation; and
a timing at which one cutting space is opened/closed is different from a timing at which another cutting space is opened/closed.

7. The cutting blade drive apparatus according to claim 6, wherein:
each of the cutting blades has a protruding shape; and
the cutting blade forming the one cutting space protrudes in a direction different from a direction in which the cutting blade forming the other cutting space protrudes.

8. The cutting blade drive apparatus according to claim 1, wherein a fixed blade unit is disposed between two cutting blade units driven by the drive mechanism, the fixed blade unit being fixed to the base unit.
